# EUROPÄISCHE PATENTSCHRIFT

(11) **EP 1 518 003 B1**
(45) Veröffentlichungstag und Bekanntmachung des Hinweises auf die Patenterteilung: **04.04.2007**
(21) Anmeldenummer: 03760620.9
(22) Anmeldetag: 14.06.2003
(51) Int. Cl.: C23C 2/00

(54) **BESCHICHTUNGSVORRICHTUNG**
COATING DEVICE
DISPOSITIF DE COUCHAGE

(30) Priorität: 21.06.2002 DE 10227778
(43) Veröffentlichungstag der Anmeldung: 30.03.2005
(73) Patentinhaber: Band-Zink GmbH, 40764 Langenfeld (DE)
(72) Erfinder: PLÄTZER, Wilfried, 47809 Krefeld (DE)
(74) Vertreter: Selting, Günther
(86) Internationale Anmeldenummer: PCT/EP2003/006302
(87) Internationale Veröffentlichungsnummer: WO 2004/001088

(56) Entgegenhaltungen:
- EP-A- 0 794 339
- EP-A- 1 096 034
- EP-A- 1 197 572
- WO-A-01/77401
- DE-A- 10 104 032
- DE-A- 19 921 191

## Beschreibung

Die Erfindung bezieht sich auf eine Beschichtungsvorrichtung zum Beschichten eines Metallbandes in einer Schmelze eines Metalles.

Beschichtungsvorrichtungen werden zur Beschichtung von Metallbändern und -blechen mit Zink, Aluminium, Zinn, Blei, Galvalum oder Galfan eingesetzt. Das Metallband bzw. -blech wird dabei durch eine mehrere Hundert Grad Celsius heiße Metallschmelze des Beschichtungsmetalls hindurchgezogen: Das Metallband taucht fortlaufend nach unten in die Metallschmelze ein, wird durch eine rotierende Umlenkwelle in der Metallschmelze nach oben umgelenkt, durch eine Stabilisierungswelle beruhigt und läuft nach oben wieder aus der Metallschmelze heraus. Die Lagerung der Umlenkwelle und/oder der Stabilisierungswelle in der Schmelze erfolgt in offenen Gleitlagern, die als Verschleißlager ausgelegt sind wie zum Beispiel aus EP 1 197 572 bekannt. Wegen der großen auftretenden Radialkräfte, der hohen Schmelzentemperatur und der ggf. hohen chemischen Aggressivität der Metallschmelze unterliegen die Gleitlager starkem Verschleiß. Bei einer pausenlos laufenden Beschichtungsanlage sind die Gleitlager bereits nach wenigen Tagen so stark verschlissen, dass sie ausgetauscht werden müssen. Die Gleitlager werden jeweils von einem Lagergehäuse und einer darin gehaltenen nicht-geschlossenen Lagerschale mit einem Lagerflächen-Paar gebildet. Wenn das Lagerflächen-Paar verschlissen ist, d. h. sich der betreffende Wellenzapfen in die beiden Lagerflächen tief eingefressen hat, muss die komplette Lagerschale gegen eine neue Lagerschale ausgetauscht werden. Hierzu müssen bei aus der Metallschmelze herausgehobener Welle die Wellenzapfen aus dem Lagergehäuse herausgezogen werden. Erst dann können die verschlissenen Lagerschalen gegen neue Lagerschalen ausgetauscht werden. Für den Austausch der beiden Lager werden auf diese Weise mehrere Stunden benötigt, was bei Beschichtungsanlagen mit einem Wert von bis zu 200 Millionen DM einen großen Kostenfaktor darstellt.

Aufgabe der Erfindung ist es, die Standzeit einer Lagerschale zu vergrößern.

Diese Aufgabe wird erfindungsgemäß mit den Merkmalen des Anspruchs 1 gelöst.

Bei der erfindungsgemäßen Beschichtungsvorrichtung ist die Lagerschale in Umfangsrichtung geschlossen ausgebildet und weist mindestens drei Lagerflächen auf, die mehrere Lagerflächen-Paare bilden. Die Lagerschale in dem Lagergehäuse ist in Umfangsrichtung in mehrere Drehpositionen drehbar und einstellbar. Zum Feststellen der Lagerschale in der eingestellten Drehposition ist ein lösbares Lagerschalen-Fixierelement vorgesehen. Jedes Gleitlager weist nunmehr mindestens drei Lagerflächen auf, die miteinander mindestens zwei verschiedene Lagerflächen-Paare bilden. Die Lagerschale ist drehbar und fixierbar in dem Lagergehäuse angeordnet, so dass nach Verschleiß eines Lagerflächen-Paares die Lagerschale soweit verdreht werden kann, dass ein anderes teilweise oder vollständig unverschlissenes Lagerflächen-Paar zum Einsatz kommt. Auf diese Weise wird nach Verschleiß eines Lagerflächen-Paares ein Austauschen der gesamten Lagerschale ein- bis mehrmals vermieden. Hierdurch wird die Standzeit einer Lagerschale, d. h. das Zeitintervall zwischen einem Komplettaustausch und dem folgenden Komplettaustausch der Lagerschale, erheblich verlängert. Zum Wechseln eines verschlissenen Lagerflächen-Paares gegen ein unverschlissenes Lagerflächen-Paar derselben Lagerschale wird nur kurze Zeit benötigt. Hierdurch werden die Wartungskosten reduziert und die Betriebszeiten der Beschichtungsanlage verlängert.

Durch die in Umfangsrichtung vollständig geschlossene Ausbildung der Lagerschale wird ferner die bei nicht-geschlossenen Lagerschalen bei hoher Radialbelastung unvermeidbare Spreizung der beiden Lagerflächen weitgehend vermieden. Hierdurch wiederum wird die Bruchgefahr in der Zone zwischen den beiden Lagerflächen auf ein Minimum reduziert. Durch die geschlossene Ausbildung wird die Lagerschale also gegen die bei hohen Radialbelastungen durch die Wellen verursachten Spreizkräfte stabilisiert und ein Bruch vermieden.

Gemäß einer bevorzugten Ausgestaltung weist die Lagerschale mehrere separate Lagerflächen-Paare auf, d. h. mehrere sich nicht überlappende Lagerflächen-Paare. Insbesondere weist die Lagerschale vier Lagerflächen-Paare auf, so dass sie über insgesamt acht Lagerflächen verfügt. Die Lagerflächen sind vorzugsweise gleichmäßig über den gesamten Umfang in Form eines gleichseitigen Vieleckes verteilt. Bei vier Lagerflächen-Paaren ergibt sich daher ein von zwei benachbarten Lagerflächen eingeschlossener Winkel von jeweils 135 °.

Gemäß einer bevorzugten Ausgestaltung weist die Lagerschale außenseitig mindestens zwei Fixiernute auf, in die zur Lagerschalen-Feststellung das Fixierelement einsteckbar ist. Das Fixierelement kann in Form einer Passfeder ausgebildet sein und stellt die formschlüssige Verbindung zwischen dem Lagergehäuse und der Lagerschale in Umfangsrichtung her. Zur Einstellung eines neuen unverschlissenen Lagerflächen-Paares wird das Fixierelement aus der ersten Fixiernut herausgezogen, die Lagerschale so verdreht, dass ein unverschlissenes Lagerflächen-Paar in Arbeitsposition steht, und das Fixierelement nunmehr in die entsprechend angeordnete zweite Fixiernut eingesteckt, um die Lagerschale in dieser Drehposition zu fixieren. Auf diese Weise wird mit einfachen Mitteln eine Drehbarkeit und zuverlässige Fixierbarkeit der Lagerschale realisiert.

Gemäß einer bevorzugten Ausgestaltung ist jedem Lagerflächen-Paar eine Fixiernut zugeordnet.

Vorzugsweise besteht die Lagerschale aus Keramik, beispielsweise aus Zirkonoxid.

Gemäß einer bevorzugten Ausgestaltung ist die Welle eine Stabilisierungswelle in der Metallschmelze, kann jedoch auch die Umlenkwelle bilden.

Im Folgenden wird unter Bezugnahme auf die Zeichnungen ein Ausführungsbeispiel der Erfindung näher erläutert.

Es zeigen:
- Fig. 1: eine erfindungsgemäße Beschichtungsvorrichtung mit einer Umlenkwelle und einer Stabilisierungswelle in einer Metallschmelze in Seitenansicht,
- Fig. 2: die Beschichtungsvorrichtung der Fig. 1 in Vorderansicht,
- Fig. 3: einen Längsschnitt eines Gleitlagers der Beschichtungsvorrichtung der Fig. 1 und
- Fig. 4: einen Querschnitt eines Gleitlagers der Beschichtungsvorrichtung der Fig. 1.

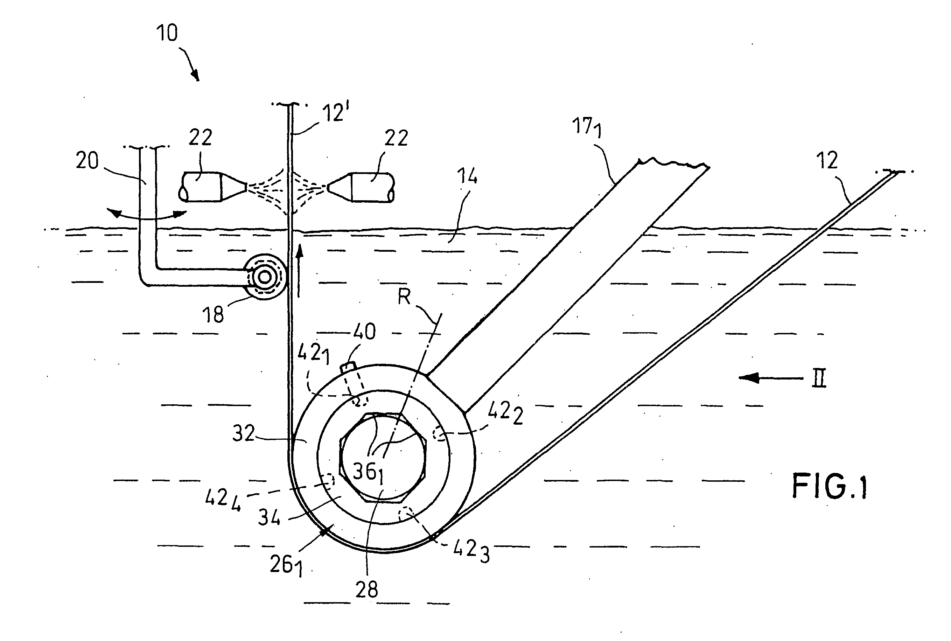

In Fig. 1 ist in Seitenansicht eine Beschichtungsvorrichtung 10 vereinfacht dargestellt. Ein Metallband 12 wird durch eine Metallschmelze 14 geleitet, um die Oberfläche des Metallbandes 12 mit einer dünnen Metallbeschichtung zu versehen. Die Metallschmelze kann aus flüssigem Zink, Blei, Zinn, Aluminium, Galvalum, Galfan oder anderen zur Metallbeschichtung geeigneten Metallen bestehen. Die Metallschmelze 14 hat, je nach Art des geschmolzenen Metalles, eine Temperatur von 400 - 1000 °C.

Das Metallband 12 wird unter einem Winkel von 30 - 45 ° zur Horizontalen in die Metallschmelze 14 eingeführt und in der Schmelze 14 durch eine drehbare Umlenkwelle 16 nach oben umgelenkt, so dass das Metallband 12' senkrecht nach oben aus der Metallschmelze 14 wieder herausgeführt wird. Der Umschlingungswinkel des Metallbandes 12, 12' um die Umlenkwelle 16 beträgt ungefähr 130 °. Die Zugkraft des Metallbandes 12 beträgt zwischen 1,0 - 5,0 Tonnen.

Zur Stabilisierung des Metallbandes 12, 12' liegt an dem senkrecht aus der Metallschmelze 14 herauslaufendem Metallband 12' eine Stabilisierungswelle 18 an, um das horizontale Flattern des Metallbandes 12' zu dämpfen und zu reduzieren. Die Stabilisierungswelle 18 ist an einem beweglichen Führungsarm 20 aufgehängt, der schwenkbar gelagert und in horizontaler Richtung auf das Metallband 12' vorgespannt ist. Ferner ist der Stabilisierungswellen-Führungsarm 20 durch ein entsprechendes Dämpfungselement in seiner horizontalen Bewegung gedämpft. Sowohl die Umlenkwelle 16 als auch die Stabilisierungswelle 18 sind im Betrieb ständig in die Metallschmelze 14 eingetaucht.

Zu beiden Seiten des aus der Metallschmelze 14 heraustretenden senkrecht verlaufenden Metallbandes 12' sind Gasdüsen 22, 24 angeordnet, durch die ein Gasstrom auf beide Seiten des Metallbandes 12' aufgebracht wird. Durch den Gasstrom wird die flüssige Metallschicht auf dem Metallband 12' auf eine bestimmte gleichbleibende Schichtdicke reduziert.

Die Umlenkwelle 16 wird durch zwei Schwenkarme 17₁, 17₂ in der Metallschmelze 14 gehalten. Die Umlenkwelle 16 ist zu Wartungs-und Reparaturzwecken aus der Metallschmelze 14 heraushebbar. Auch der Schwenkarm 20 mit der Stabilisierungswelle 18 ist zu diesem Zweck aus der Metallschmelze 14 heraushebbar. Die Arme 17₁, 17₂, 20 werden mittels einer nicht dargestellten Wechseltraverse, an der sie befestigt sind, aus der Metallschmelze 14 herausgehoben. In Fig. 1 sind die Umlenkwelle 16 und das Metallband 12, 12' im Querschnitt dargestellt.

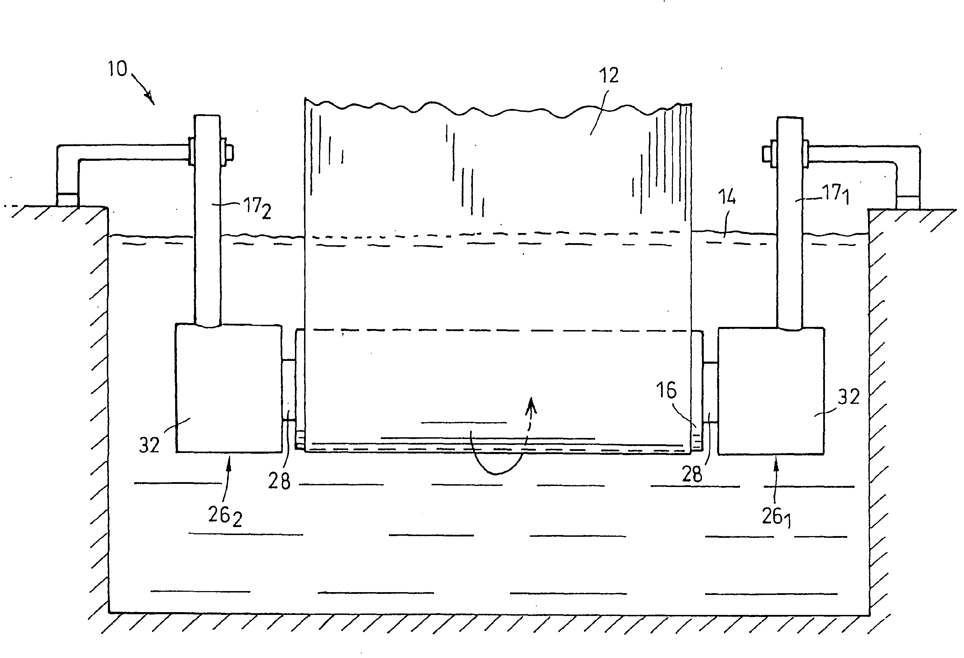

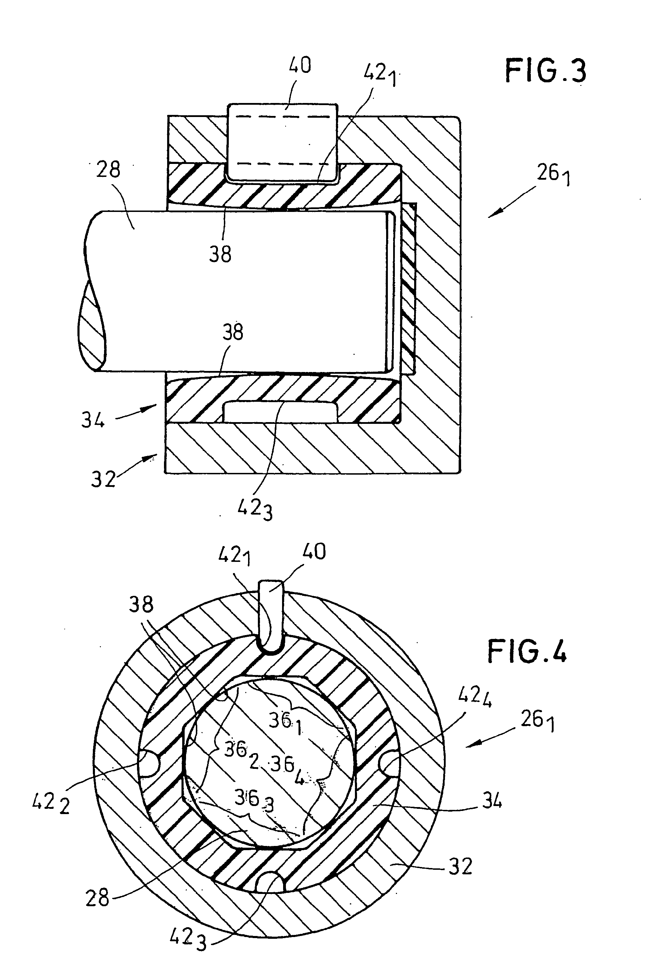

Wie in den Fig. 1 - 4 erkennbar ist, sind an den beiden eingetauchten Enden der Schwenkarme 17₁, 17₂ jeweils Gleitlager 26₁, 26₂ vorgesehen, in denen die Umlenkwelle 16 drehbar gelagert ist. Bei den beiden Gleitlagern 26₁, 26₂ handelt es sich um Verschleißlager, die im Wesentlichen von einem Lagergehäuse 32 und einer darin eingesteckten Lagerschale 34 gebildet werden. In den Lagerschalen 34 sind die beiden Wellenzapfen 28 der Umlenkwelle 16 eingesteckt und gelagert. Die Lagerschale ist eine zylinderartig in Umfangsrichtung vollständig geschlossene Buchse, die insgesamt vier Lagerflächen-Paare 36₁ - 36₄ aufweist. Jedes Lagerflächen-Paar 36₁ - 36₄ wird von zwei benachbarten Lagerflächen 38 gebildet. Alle Lagerflächen 38 sind gleichmäßig über den Umfang verteilt, so dass sie zusammen ein gleichseitiges Achteck bilden, mit einem Winkel von 135 ° zwischen zwei benachbarten Lagerflächen 38. Jede Lagerschale 34 ist einstückig ausgebildet und besteht aus Zirkonoxid, kann jedoch auch aus einem anderen Keramikmaterial bestehen.

Der Außenumfang der Lagerschalen 34 und der Innenumfang des aus Metall bestehenden Lagergehäuses 32 sind jeweils kreisringförmig, wobei zwischen der Lagerschalenaußenseite und der Lagergehäuseinnenseite ein Spiel von ca. 0,5 mm verbleibt. Auf diese Weise ist sichergestellt, dass die Lagerschale 34 praktisch widerstandslos in dem Lagergehäuse 32 gedreht werden kann.

Jede Lagerfläche 38 ist im Querschnitt gerade und im Längsschnitt leicht konvex ausgebildet, so dass sich mit dem Wellenzapfen 28 praktisch nur eine punktförmige Berührungsfläche ergibt.

Im Bereich des geschlossenen Bodens des Lagergehäuses 32 ist jeweils eine axiale Anschlagplatte 44 aus Keramik eingelassen.

Wie sich insbesondere aus Fig. 1 ergibt, wirkt die sich aus den beiden unter Spannung stehenden Metallbandschenkeln bewirkte Resultierende R der auf die beiden Gleitlager 26₁, 26₂ wirkenden Radialkräfte ungefähr in Richtung der Winkel-halbierenden der beiden Schenkel des Metallbandes 12, 12'. Die beiden Lagerflächen 38 eines Lagerflächen-Paares, das in seiner Gebrauchsstellung steht, sind ungefähr zu beiden Seiten der Radialkraftresultierenden R angeordnet, d. h. die Radialkraft- resultierende R liegt ungefähr in der Mitte zwischen den beiden Lagerflächen 38 des betreffenden Lagerflächen-Paares 36₁. Sobald die beiden Lagerflächen 38 eines Lagerflächen-Paares 36₁ verschlissen sind, werden die betreffenden Schwenkarme 17₁, 17₂, 20 aus der Metallschmelze 14 herausgeschwenkt. In herausgeschwenktem Zustand wird das Fixierelement 40 aus der Fixierelement-Öffnung des Lagergehäuses 32 und der ersten Fixiernut 42₁ der Lagerschale 34 herausgezogen und um 90 ° verdreht. Hierdurch wird das verschlissene Lagerflächen-Paar 36₁ aus der Gebrauchsstellung herausgedreht und ein verschlissenes Lagerflächen-Paar 36₂ in die Gebrauchsposition gedreht. In dieser neuen Drehposition der Lagerschale 34 wird das Fixierelement 40 in die zugeordnete Fixiernut 42₂ eingesetzt und die Lagerschale 34 auf diese Weise in Umfangsrichtung gegen Verdrehung gesichert. Anschließend werden die entsprechenden Schwenkarme 17₁, 17₂, 20 wieder in ihre Arbeitsposition in die Metallschmelze 14 abgesenkt.

Auch die Stabilisierungswelle 18 ist mit ihren Wellenzapfen in umfangsmäßig geschlossenen Lagerschalen mit vier Lagerflächen-Paaren gelagert. Auch hierbei ist durch Verdrehen der Lagerschale ein verschlissenes Lagerflächen-Paar durch ein unverschlissenes Lagerflächen-Paar ersetzbar.

Durch Vorsehen mehrerer Lagerflächen-Paare in der Lagerschale und durch die Drehbarkeit und Fixierbarkeit der Lagerschale in dem Lagergehäuse kann ein verschlissenes Lagerflächen-Paar auf einfache Weise durch Verdrehen ersetzt werden. Erst wenn alle Lagerflächen-Paare verschlissen sind, muss die Lagerschale ausgetauscht werden.

## Patentansprüche

1. Beschichtungsvorrichtung zum Beschichten eines Metallbandes (12) in einer Metallschmelze (14),
mit einer in der Metallschmelze (14) mit einem Gleitlager (26₁, 26₂) drehbar gelagerten Welle (16, 18) zum Führen des Metallbandes (12),
wobei das Gleitlager (26₁, 26₂) von einem Lagergehäuse (32) und einer darin gehaltenen Lagerschale (34) mit einem Lagerflächen-Paar (36₁ - 36₄) gebildet wird,
**dadurch gekennzeichnet,**
**dass** die Lagerschale (34) in Umfangsrichtung geschlossen ist und mindestens drei Lagerflächen (38) aufweist, die mehrere Lagerflächen-Paare (36₁ - 36₄) bilden,
**dass** die Lagerschale (34) in dem Lagergehäuse (32) in Umfangsrichtung in mehrere Drehpositionen einstellbar ist, und
**dass** ein lösbares Lagerschalen-Fixierelement (40) vorgesehen ist, durch das die Lagerschale (34) in der eingestellten Drehposition gegenüber dem Lagergehäuse (32) feststellbar ist.

2. Beschichtungsvorrichtung nach Anspruch 1, **dadurch gekennzeichnet, dass** die Lagerschale (34) mehrere Lagerflächen-Paare (36₁ - 36₄) aufweist.

3. Beschichtungsvorrichtung nach Anspruch 2, **dadurch gekennzeichnet, dass** die Lagerschale (34) vier Lagerflächen-Paare (36₁ - 36₄) aufweist.

4. Beschichtungsvorrichtung nach einem der Ansprüche 1 - 3, **dadurch gekennzeichnet, dass** die Lagerflächen (38) gleichmäßig über den Lagerschalenumfang verteilt sind und ein gleichseitiges Vieleck bilden.

5. Beschichtungsvorrichtung nach einem der Ansprüche 1 - 4, **dadurch gekennzeichnet, dass** die Lagerschale (34) außenseitig mindestens zwei Fixiernute (42₁ - 42₄) aufweist, in die zur Lagerschalen-Feststellung das Fixierelement (40) einsteckbar ist.

6. Beschichtungsvorrichtung nach einem der Ansprüche 1 - 5, **dadurch gekennzeichnet, dass** jedem Lagerflächen-Paar (36₁ - 36₄) eine Fixiernut (42₁ - 42₄) zugeordnet ist.

7. Beschichtungsvorrichtung nach einem der Ansprüche 1 - 6, **dadurch gekennzeichnet, dass** die Lagerschale (34) aus Keramik besteht.

8. Beschichtungsvorrichtung nach einem der Ansprüche 1 - 7, **dadurch gekennzeichnet, dass** die Welle eine Stabilisierungswelle (18) bildet.

## Claims

1. Coating device for coating a metal strip (12) in a metal melt (14),
comprising a shaft (16,18) rotatably supported in the metal melt (14) by means of a slide bearing (26₁,26₂), for guiding the metal strip (12),
the slide bearing (26₁,26₂) being formed by a bearing housing (32) and a bearing bush (34) with a pair (36₁ - 36₄) of bearing surfaces held therein,
**characterized in**
**that** the bearing bush (34) is circumferentially closed and comprises at least three bearing surfaces (38) forming several pairs (36₁ - 36₄) of bearing surfaces,
**that** the bearing bush (34) is adapted to be set in several rotational positions in circumferential direction in the bearing housing (32), and
**that** a releasable bearing bush fixing element (40) is provided by means of which the bearing bush (34) is adapted to be locked in the set rotational position with respect to the bearing housing (32).

2. Coating device according to claim 1, **characterized in that** the bearing bush (34) comprises several pairs (36₁ - 36₄) of bearing surfaces.

3. Coating device according to claim 2, **characterized in that** the bearing bush (34) comprises four pairs (36₁ - 36₄) of bearing surfaces.

4. Coating device according to one of claims 1 - 3, **characterized in that** the bearing surfaces (38) are equally distributed over the circumference of the bearing bush and form an equilateral polygon.

5. Coating device according to one of claims 1 - 4, **characterized in that** the bearing bush (34) comprises at least two fixing grooves (42₁ - 42₄) at its outside into which the fixing element (40) is insertable for locking the bearing bush.

6. Coating device according to one of claims 1-5, **characterized in that** each pair (36₁ - 36₄) of bearing surfaces has a fixing groove (42₁ - 42₄) associated thereto.

7. Coating device according to one of claims 1-6, **characterized in that** the bearing bush (34) consists of ceramics.

8. Coating device according to one of claims 1-7, **characterized in that** the shaft forms a stabilizing shaft (18).

## Revendications

1. Dispositif de formation de revêtement pour garnir une bande métallique (12) d'un revêtement dans une masse de métal en fusion (14),
comprenant un arbre (16, 18) monté à rotation dans la masse de métal en fusion (14), à l'aide d'un palier lisse (26₁, 26₂), et destiné à guider la bande métallique (12),
le palier lisse (26₁, 26₂) étant constitué d'un corps de palier (32) et d'un coussinet de palier (34), maintenu dans ce dernier et présentant une paire de surfaces de portée (36₁ à 36₄),
**caractérisé**
**en ce que** le coussinet de palier (34) est fermé dans la direction circonférentielle et présente au moins trois surfaces de portée (38), qui forment plusieurs paires de surfaces de portée (36₁ à 36₄),
**en ce que** le coussinet de palier (34) est, à l'intérieur du corps de palier (32), ajustable en direction circonférentielle, dans plusieurs positions angulaires, et
**en ce qu'**il est prévu un élément de blocage de coussinet de palier (40), amovible, par lequel le coussinet de palier (34) peut être immobilisé dans la position angulaire ajustée, par rapport au corps de palier (32).

2. Dispositif de formation de revêtement selon la revendication 1, **caractérisé en ce que** le coussinet de palier (34) présente plusieurs paires de surfaces de portée (36₁ à 36₄).

3. Dispositif de formation de revêtement selon la revendication 2, **caractérisé en ce que** le coussinet de palier (34) présente quatre paires de surfaces de portée (36₁ à 36₄).

4. Dispositif de formation de revêtement selon l'une des revendications 1 à 3, **caractérisé en ce que** les surfaces de portée (38) sont uniformément réparties sur la circonférence du coussinet de palier et forment un polygone équilatéral.

5. Dispositif de formation de revêtement selon l'une des revendications 1 à 4, **caractérisé en ce que** sur sa face extérieure, le coussinet de palier (34) présente au moins deux rainures de blocage (42₁ à 42₄), dans lesquelles l'élément de blocage (40) peut être enfiché pour l'immobilisation du coussinet de palier.

6. Dispositif de formation de revêtement selon l'une des revendications 1 à 5, **caractérisé en ce qu'**à chaque paire de surfaces de portée (36₁ à 36₄) est associée une rainure de blocage (42₁ à 42₄).

7. Dispositif de formation de revêtement selon l'une des revendications 1 à 6, **caractérisé en ce que** le coussinet de palier (34) est réalisé en céramique.

8. Dispositif de formation de revêtement selon l'une des revendications 1 à 7, **caractérisé en ce que** l'arbre forme un arbre de stabilisation (18).
